# FASCICULE DE BREVET EUROPEEN

(11) **EP 1 669 265 B1**
(45) Date de publication et mention de la délivrance du brevet: **10.12.2008**
(21) Numéro de dépôt: 05300918.9
(22) Date de dépôt: 14.11.2005
(51) Int. Cl.: B60S 1/34, B60S 1/36

(54) **Balai d'essuie-glace pour vehicule automobile**
Scheibenwischerblatt für Kraftfahrzeuge
A windscreen-wiper blade for vehicles

(30) Priorité: 19.11.2004 FR 0452698
(43) Date de publication de la demande: 14.06.2006
(73) Titulaire: Peugeot Citroën Automobiles SA, 78943 Vélizy-Villacoublay Cedex (FR)
(72) Inventeur: Jeuffe, Gérard, 78810, FEUCHEROLLES (FR)
(74) Mandataire: Couillard, Yann Luc Raymond

(56) Documents cités:
- EP-A- 0 560 538
- DE-A1- 4 225 374
- US-A- 5 542 145
- PATENT ABSTRACTS OF JAPAN vol. 2000, no. 06, 22 septembre 2000 (2000-09-22) & JP 2000 085539 A (TANAKA HIROSHI), 28 mars 2000 (2000-03-28)
- PATENT ABSTRACTS OF JAPAN vol. 1999, no. 01, 29 janvier 1999 (1999-01-29) & JP 10 264772 A (ASMO CO LTD), 6 octobre 1998 (1998-10-06)

## Description

La présente invention est relative à un balai d'essuie-glace pour véhicule automobile, comportant une raclette souple portée par un support mobile sur son bras de commande.

Les réalisations actuelles de véhicules automobiles et en particulier les nouvelles formes de leurs carrosseries, privilégient l'usage de vitres de grande surface, notamment pour le pare-brise avant et, le cas échéant, pour la lunette arrière.

Les raclettes souples des balais d'essuie-glace, qui se déplacent au contact de la paroi de ces surfaces vitrées, le plus généralement avec un mouvement d'oscillation alterné à vitesse et fréquence variables, n'ont qu'une efficacité réduite à partir du moment où la surface approximativement circulaire à rayon constant qu'elles décrivent et balayent par l'effet de la rotation de leurs bras de support autour d'un axe de rotation approprié, porté par la carrosserie, ne peuvent recouvrir la vitre que très partiellement, aussi bien en largeur qu'en hauteur, la course des balais étant en outre volontairement limitée pour que ceux-ci ne sortent pas, en fin de trajet après chaque oscillation, du contour du pavillon ou des montants de la carrosserie qui délimitent la zone recevant la vitre.

Or, il est souhaitable que la zone balayée puisse être au moins en partie adaptée à la position relative des yeux des personnes occupant le véhicule par rapport à la surface vitrée considérée et en particulier ne soit pas trop limitée dans le sens de la hauteur de cette dernière.

Le brevet US 4.418.440 décrit une solution selon laquelle le bras oscillant du balai, entraîné en rotation alternée par un axe de commande actionné par un moteur disposé dans la carrosserie au plus près d'un côté de la vitre à balayer, comporte un montage télescopique pour le support de la raclette qui frotte sur la surface externe de la vitre, ce support étant réuni à des moyens qui exercent un effort de traction limité propre à le faire coulisser sur le bras et à réduire sa longueur lorsque ce support est dans une position où il est dirigé vers les bords de l'encadrement de la vitre à balayer.

Grâce à ces dispositions, la longueur totale du balai formé par le bras de commande et le support de la raclette en contact avec la surface de la vitre peut varier, augmentant dans la zone médiane ou courante de la vitre au cours du balayage exécuté pour accroître l'étendue de la surface essuyée, et diminuant lorsque le balai est proche d'un bord de l'encadrement recevant la vitre, pour empêcher le balai de franchir le montant latéral en regard.

Il s'avère toutefois que les moyens décrits dans ce document antérieur pour réaliser le mouvement relatif du balai vis-à-vis de son bras de support au cours des oscillations alternées de ce bras, sont particulièrement complexes, faisant usage d'une courroie crantée d'entraînement et de plusieurs galets de guidage portés par des axes parallèles répartis sur la carrosserie, ce qui rend le système coûteux, mal adapté à des variations de fréquence d'oscillation du balai et sans intérêt pratique apparent.

Nous connaissons également le brevet EP 560538 décrit un système d'essuyage comprenant une raclette d'essuyage fixé sur une barre coulissante munie d'une crémaillère, un support en forme de U pour supporter la barre coulissante et approprié pour permettre à la barre coulissante de se déplacer longitudinalement. Un moteur d'essuie-glace solidaire du support pour l'entraîner en rotation et un moteur d'actionnement solidaire du support pour déplacer la barre coulissante longitudinalement. Le moteur d'actionnement muni d'un pignon en prise dans la crémaillère de la barre coulissante est destiné à positionner la barre coulissante solidaire de la raclette dans ses positions d'extrémité dont la course est limitée à l'intervalle entre les branches du support en U. Le système d'essuyage permet d'assurer le balayage d'une surface vitrée en deux plages d'essuyages unidirectionnels lors de chaque rotation complète du support entraîné en rotation par le moteur d'essuie-glace.

Ce système présente l'inconvénient de générer une plage de rotation de non essuyage de manière à placer la raclette d'une position de fin d'essuyage à une position de début d'essuyage. En outre la barre coulissante rigide axée autour du moteur d'essuie-glace ne permet pas de s'adapter aux pare-brise de forme convexe.

Le but de la présente invention est de pallier tout ou partie les inconvénients cités précédemment en proposant un système d'essuyage continûment variable.

A cet effet, l'invention se rapporte à un système d'essuyage comportant un balai d'essuie-glace solidaire d'un bras solidaire d'un axe permettant l'essuyage d'une surface par mouvements de rotation en va-et-vient dudit bras caractérisé en ce que le dispositif de déplacement porte un actionneur monté sur le bras qui commande une bague de guidage monté à coulissement sur une lame (10) du bras oscillant pour permettre une translation sensiblement parallèle audit bras, de façon variable continûment pour effectuer le déplacement relatif dudit balai d'essuie-glace par rapport audit bras, quelle que soit la position angulaire du bras par rapport à la surface vitrée à balayer.

Conformément à d'autres caractéristiques avantageuses de l'invention :
- selon une première variante, le dispositif de déplacement comporte un ensemble du type vis sans fin entre 1'actionneur et la bague de guidage ;
- l'ensemble du type vis sans fin comporte une noix solidaire de la bague de guidage comprenant un taraudage destiné à suivre le filet d'une tige commandé par l'actionneur ;
- selon une deuxième variante, le dispositif de déplacement comporte un actionneur du type vérin double effet pour permettre de commander directement en translation ladite bague de guidage ;
- ledit vérin comporte un piston du type rotatif pour permettre de varier l'angle d'incidence dudit balai d'essuie-glace ;
- le balai d'essuie-glace est monté sur la bague de guidage.

L'invention se rapporte également à un véhicule automobile caractérisé en ce qu'il comporte au moins un système d'essuyage conforme à l'une des variantes précédemment citées et à un procédé de gestion d'un système d'essuyage conforme à l'une des variantes précédemment citées caractérisé en ce qu'il comporte l'étape consistant à gérer le signal de commande de l'actionneur en fonction de la position du bras et/ou de la vitesse de déplacement du bras au cours de ses oscillations et/ou de la fréquence des oscillations du bras et/ou de la vitesse du véhicule automobile.

D'autres caractéristiques d'un dispositif conforme à l'invention apparaîtront encore à travers la description qui suit d'un exemple de réalisation, donné à titre indicatif et non limitatif, en référence aux dessins annexés sur lesquels :
- La Figure 1 est une vue schématique de dessus d'un pare-brise avant de véhicule automobile, muni d'un système d'essuyage conforme à l'invention.
- La Figure 2 est une vue en perspective à plus grande échelle dudit système.

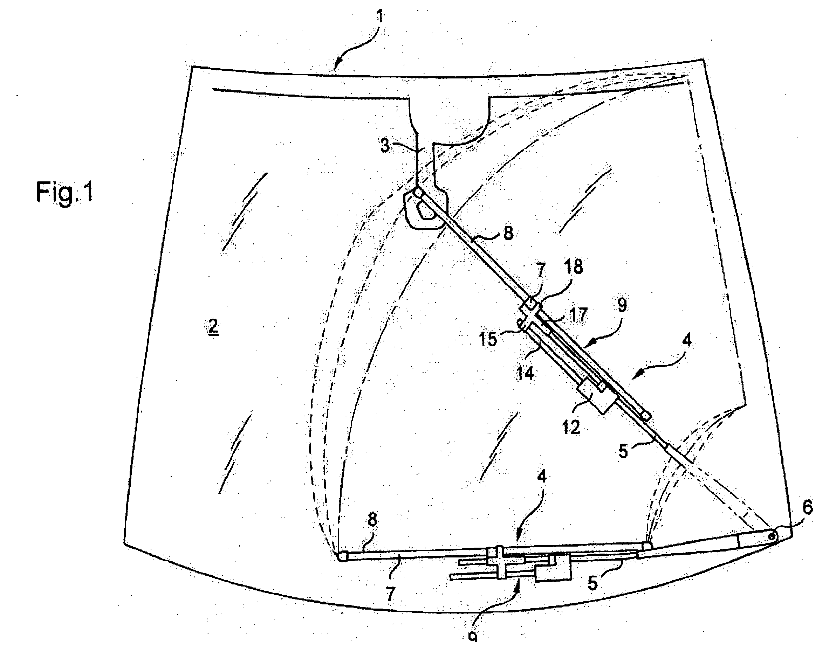

Dans l'exemple illustré à la Figure 1, la référence 1 désigne l'encadrement ménagé dans la carrosserie d'un véhicule automobile (non représenté), pour recevoir une surface vitrée 2 qui constitue, par exemple, le pare-brise avant ou arrière. Le système d'essuyage selon l'invention, généralement annoté 4, peut être immédiatement adapté pour le balayage de telles surfaces vitrées.

Dans l'exemple de réalisation représenté, on considère plus particulièrement le cas du pare-brise avant, celui-ci étant identifié à titre purement indicatif, par le montage schématiquement illustré, derrière sa surface vitrée 2, vers la partie supérieure de la carrosserie, d'un support 3 de détecteur de pluie ou analogue, selon une disposition parfaitement classique dans l'ensemble des véhicules actuellement connus.

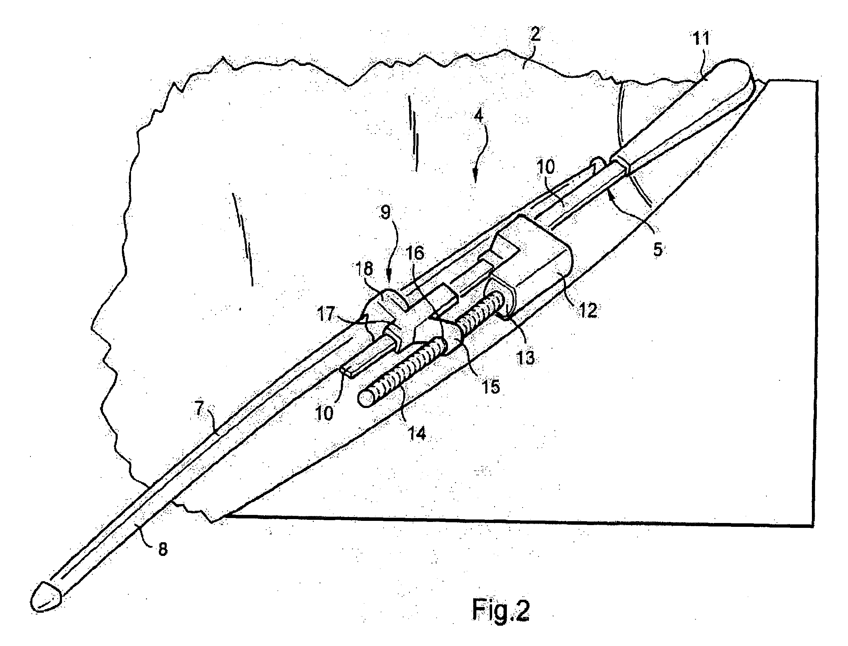

Selon l'invention, le système d'essuyage 4 comporte essentiellement un balai d'essuie-glace 7, un bras 5 et un dispositif de déplacement 9. Comme visible à la figure 1, le bras 5 est monté oscillant autour d'un axe 6 porté par la carrosserie, ici dans le bord inférieur de l'encadrement 1. De manière connue, l'axe 6 est commandé en rotations alternées au moyen d'un moteur d'entraînement (non représenté). Comme visible aux figures 1 et 2, le balai d'essuie-glace 7 est solidaire de l'extrémité du bras 5. Les rotations de ce dernier obligent donc ce premier à imprimer les mêmes mouvements.

Dans le cas illustré à la figure 1, l'ensemble bras 5 - balai d'essuie-glace 7 est utilisé pour un essuyage du type papillon, c'est-à-dire qu'un second ensemble bras 5 - balai d'essuie-glace 7, monté en bas à gauche de l'encadrement 1, imprime une rotation inverse au premier bras lorsqu'ils sont activés.

Le balai d'essuie-glace 7 comporte essentiellement un raclette 8 qui, au contact permanent avec la surface vitrée 2, permet lors desdites oscillations de chasser les corps présents sur sa trajectoire. La raclette 8 est réalisée, préférentiellement, en caoutchouc synthétique lui conférant une souplesse adéquate et une durée de vie notable en fonctionnement.

A titre accessoire, les moyens qui assurent le montage de la raclette 8 sur le balai 7 peuvent comprendre, de manière connue, un ensemble à ressorts (non illustré pour ne pas surcharger inutilement les figures) pour permettre d'appliquer étroitement et de façon permanente la raclette 8 au contact de la surface vitrée 2 au cours de ses déplacements commandés par le bras oscillant 5, même lorsque le profil de cette surface vitrée est plus ou moins bombé, comme c'est le cas dans la quasi-totalité des véhicules automobiles actuellement mis sur le marché.

Conformément à l'invention, la liaison entre le bras oscillant 5 et le balai d'essuie-glace 7 est assurée par un dispositif de déplacement 9 dont la Figure 2 illustre plus en détail la réalisation. Le dispositif 9 est aménagé de telle sorte que la longueur totale du système d'essuyage 4, déterminée par celle du bras 5 à laquelle s'ajoute tout ou partie de celle du balai 7, soit variable continûment quelle que soit la position angulaire du bras 5 par rapport à la surface vitrée 2 à balayer.

Dans l'exemple plus spécialement considéré tel qu'illustré sur la Figure 2, le bras oscillant 5 comporte essentiellement une lame plate 10 qui de raccord à une de ses extrémités à l'axe 6. Préférentiellement, un manchon 11 recouvre partiellement la lame plate 10 au niveau dudit axe pour les protéger.

Sur la lame 10 est immobilisé un boîtier 12 qui, de faibles dimensions, est destiné à recevoir un actionneur 13. Dans cet exemple, l'actionneur 13 est constitué par un moteur électrique miniaturisé du type asynchrone réversible. Préférentiellement, l'actionneur 13 comporte un diamètre au plus égal à 15 mm et est capable de développer une force de translation de l'ordre de 40 N.

L'actionneur 13 peut entraîner en rotation continue dans un sens ou dans l'autre, une vis de commande 14 dans le but de réaliser un ensemble du type vis sans fin. A cet effet, la vis 14 est en prise avec le balai d'essuie-glace 7 par l'intermédiaire d'une bague de guidage 17.

La bague de guidage 17 est montée à coulissement sur la lame 10 du bras oscillant 5. Comme visible aux figures 1 et 2, elle comporte principalement contre chacun de ses deux flancs respectivement une noix 15 qui comprend un alésage fileté interne 16 et une pièce 18 sur laquelle est fixé le balai d'essuie-glace 7 portant la raclette souple 8.

Dans ces conditions, on comprend aisément que lorsque le dispositif de déplacement 9 est actionné, la vis de commande 14 est entraînée en rotation (par l'actionneur 13 logé dans le boîtier 12 fixé au bras 5) ce qui provoque le déplacement en translation du balai d'essuie-glace 7 par rapport à au bras 5. La translation est réalisée consécutivement à l'entraînement de la noix 15 sur la vis 14, au coulissement concomitant de la bague de guidage 17 sur la lame 10 de ce bras et, par conséquent, à la translation du balai d'essuie-glace 7 lié à la bague de guidage 17 par la pièce 18.

Avantageusement, l'actionnement du dispositif de déplacement peut ainsi être initié quelle que soit la position du bras 5 vis-à-vis de la surface vitrée 2 au cours de ses débattements selon les rotations successives alternées qui lui sont imposées pour permettre l'accroissement ou la réduction, selon le cas, de la longueur effective du système d'essuyage 4 constitué par le bras 5 et une partie du balai d'essuie-glace 7.

En se référant aux trajectoires en pointillés représentées à la Figure 1, on voit ainsi que l'on peut moduler à volonté la position relative de la raclette de balayage 8 vis-à-vis du bras oscillant 5. Cela peut notamment être utile pour permettre le rapprochement du support 3 du détecteur de pluie par rapport à l'encadrement 1 et ainsi augmenter la surface vitrée transparente. En effet sur la trajectoire en traits interrompus - courts correspondant à un essuyage traditionnel, le balai d'essuie-glace 7 ne passe pas par le détecteur positionné plus près de l'encadrement et devient alors inefficace.

Préférentiellement et dans l'exemple illustré à la figure 1, la longueur du système d'essuyage 4 est à mi-distance dans les zones extrêmes d'oscillation, c'est-à-dire quand la raclette 8 est sensiblement horizontale ou sensiblement verticale afin notamment de ne pas risquer de déborder de l'encadrement 1 au voisinage des fins de course du bras oscillant 5, dans un sens et dans l'autre.

Préférentiellement entre ces deux positions de fin de course, la longueur du système d'essuyage 4 est continûment variable et comprise entre un minimum ou maximum correspondant à la course respectivement minimale et maximale de la bague de guidage 17.

L'actionneur 13, constitué dans l'exemple décrit par le moteur électrique miniaturisé logé dans le boîtier 12 peut être avantageusement relié au système électronique qui équipe désormais tout véhicule automobile. Ceci en particulier pour autoriser une gestion électronique des courses d'extension et de rétraction relatives de la raclette de balayage 8 vis-à-vis du bras oscillant 5.

Cela peut permettre la mise en oeuvre de moyens de commande appropriés du dispositif de déplacement 9, par exemple, pour sa mise sous tension, pour sélectivement son ajustement comme, par exemple, en fonction de la position du bras 5, de la vitesse de déplacement du bras 5 au cours de ses oscillations, de la fréquence de ces dernières et/ou de la vitesse du véhicule automobile. D'autres alternatives peuvent bien évidemment être envisagées.

On peut notamment prévoir des moyens de signalisation sur le tableau de bord du véhicule ou en tout autre endroit approprié, du type diodes électroluminescentes ou autres, pour repérer l'arrêt ou inversement la mise en route du dispositif de déplacement 9.

On peut également prévoir sur cette vis ou sur le balai d'essuie-glace 7 des butées de fin de course, propres à limiter l'amplitude maximale et minimale des mouvements du dispositif de déplacement 9.

Bien entendu, il va de soi que l'invention ne se limite pas à l'exemple de réalisation plus spécialement décrit ci-dessus, dans lequel on envisage la mise en oeuvre d'un moteur électrique réversible miniaturisé.

En variante et sans sortir du cadre de l'invention, on peut envisager de réaliser l'actionneur 13 sous la forme d'un vérin électrique commandé à distance en coordination avec les mouvements du bras oscillant 5, la partie mobile de ce vérin entraînant directement le balai d'essuie-glace 7 avec guidage selon la direction du bras 5 pour accroître ou diminuer de façon strictement analogue la longueur totale du balai 7 et le positionnement relatif de la raclette 8 contre la surface vitrée 2 à balayer.

A la condition de modifier la section du bras 5 en une section sensiblement cylindrique et, par conséquent, en modifiant la bague de guidage 17 par une forme correspondante, ce vérin peut également comporter un piston du type rotatif pour permettre de régler l'incidence du balai d'essuie-glace 7 quelle que soit la position du bras 5 par rapport à la surface vitrée 2. L'incidence est ainsi modifiée par glissement de la bague de guidage 17 autour de la section du bras 5. Le vérin peut par conséquent faire varier la trajectoire du balai d'essuie-glace 7 par rapport à celle du bras 5 et/ou l'angle d'incidence du balai d'essuie-glace 7 par rapport à la surface vitrée 2.

De même, on conçoit aisément que les dispositions décrites dans l'exemple considéré ne sont pas dépendantes de la position de la surface vitrée 2 elle-même dans la carrosserie, qui peut donc être celle du pare-brise avant, comme aussi bien celle de la lunette arrière du véhicule.

## Revendications

1. Système d'essuyage (4) comportant un balai d'essuie-glace (7) solidaire d'un bras (5) solidaire d'un axe (6) permettant l'essuyage d'une surface (2) par mouvements de rotation en va-et-vient dudit bras comportant un dispositif de déplacement (9) monté entre le bras (5) et le balai d'essuie-glace (7) pour permettre la variation de la longueur global du système d'essuyage (4), **caractérisé en ce que** le dispositif de déplacement (9) comporte un actionneur (13) monté sur le bras (5) qui commande une bague de guidage (17) monté à coulissement sur une lame (10) du bras oscillant (5) pour permettre une translation sensiblement parallèle audit bras, de façon variable continûment pour effectuer le déplacement relatif dudit balai d'essuie-glace par rapport audit bras, quelle que soit la position angulaire du bras (5) par rapport à la surface vitrée(2) à balayer afin d'obtenir une surface d'essuyage accrue.

2. Système d'essuyage (4) selon la revendication 1, **caractérisé en ce que** le dispositif de déplacement (9) comporte un ensemble du type vis sans fin entre l'actionneur (13) et la bague de guidage (17).

3. Système d'essuyage (4) selon la revendication 2, **caractérisé en ce que** l'ensemble du type vis sans fin comporte une noix (15) solidaire de la bague de guidage (17) comprenant un taraudage (16) destiné à suivre le filet d'une tige (14) commandé par l'actionneur (13).

4. Système d'essuyage (4) selon la revendication 1, **caractérisé en ce que** le dispositif de déplacement (9) comporte un actionneur (13) du type vérin double effet pour permettre de commander directement en translation ladite bague de guidage (17).

5. Système d'essuyage (4) selon la revendication 4, **caractérisé en ce que** ledit vérin comporte un piston du type rotatif pour permettre de commander l'angle d'incidence du balai d'essuie-glace (7).

6. Système d'essuyage (4) selon l'une des revendications 1 à 5, **caractérisé en ce que** le balai d'essuie-glace (7) est monté sur la bague de guidage (17).

7. Véhicule automobile **caractérisé en ce qu'**il comporte au moins un système d'essuyage (4) conforme à l'une des revendications précédentes.

8. Procédé de gestion d'un système d'essuyage (4) conforme à l'une des revendications 1 à 7 **caractérisé en ce qu'**il comporte l'étape consistant à gérer le signal de commande de l'actionneur (13) en fonction de la position du bras (5)

9. Procédé selon la revendication 8, **caractérisé en ce qu'**il comporte l'étape consistant à gérer le signal de commande de l'actionneur (13) en fonction de la vitesse de déplacement du bras (5) au cours de ses oscillations

10. Procédé selon les revendications 8 ou 9, **caractérisé en ce qu'**il comporte l'étape consistant à gérer le signal de commande de l'actionneur (13) en fonction de la fréquence des oscillations du bras (5).

11. Procédé selon l'une des revendications 9 à 10, **caractérisé en ce qu'**il comporte l'étape consistant à gérer le signal de commande de l'actionneur (13) en fonction de la vitesse du véhicule automobile.

## Claims

1. Wiper system (4) comprising a windscreen-wiper blade (7) mounted on an arm (5) connected to a shaft (6) for wiping a surface (2) by oscillating rotary movements of said arm comprising a movement device (9) mounted between the arm (5) and the windscreen-wiper blade (7) to allow adjustments to the total length of the wiper system (4), said system being **characterized in that** the movement device (9) comprises an actuator (13) mounted on the arm (5) and controlling a guide ring (17) that slides along a tongue (10) of the oscillating arm (5) to make possible a translational movement essential parallel to said arm, in a continuously variable manner for the purpose of moving said windscreen-wiper blade relative to said arm irrespective of the angular position of the arm (5) with respect to the glazed surface (2) to be wiped in order to obtain a greater wiped area.

2. Wiper system (4) according to Claim 1, **characterized in that** the movement device (9) comprises a worm type assembly between the actuator (13) and the guide ring (17).

3. Wiper system (4) according to Claim 2, **characterized in that** the worm type assembly comprises a nut (15) connected to the guide ring (17) comprising a tapped hole (16) designed to follow the thread on a rod (14) driven by the actuator (13).

4. Wiper system (4) according to Claim 1, **characterized in that** the movement device (9) comprises a double-acting ram type actuator (13) for directly producing translational movement of said guide ring (17).

5. Wiper system (4) according to Claim 4, **characterized in that** said ram comprises a rotary piston to enable the angle of incidence of the windscreen-wiper blade (7) to be controlled.

6. Wiper system (4) according to one of Claims 1 to 5, **characterized in that** the windscreen-wiper blade (7) is mounted on the guide ring (17).

7. Motor vehicle **characterized in that** it comprises at least one wiper system (4) in accordance with one of the preceding claims.

8. Method for controlling a wiper system (4) in accordance with one of Claims 1 to 7, **characterized in that** it comprises the step of controlling the operating signal to the actuator (13) as a function of the position of the arm (5).

9. Method according to Claim 8, **characterized in that** it comprises the step of controlling the operating signal to the actuator (13) as a function of the speed of movement of the arm (5) in the course of its oscillations.

10. Method according to Claim 8 or 9, **characterized in that** it comprises the step of controlling the operating signal to the actuator (13) as a function of the frequency of the oscillations of the arm (5).

11. Method according to either of Claims 9 and 10, **characterized in that** comprises the step of controlling the operating signal to the actuator (13) as a function of the speed of the motor vehicle.

## Patentansprüche

1. Wischsystem (4), welches ein Scheibenwischblatt (7) aufweist, das fest mit einem Arm (5) verbunden ist, der wiederum fest mit einer Achse (6) verbunden ist, welches das Wischen einer Fläche (2) durch pendelförmige Drehbewegungen des Arms ermöglicht und welches eine Bewegungsvorrichtung (9) aufweist, die zwischen dem Arm (5) und dem Scheibenwischblatt (7) angeordnet ist, um eine Änderung der Gesamtlänge des Wischsystems (4) zu ermöglichen, **dadurch gekennzeichnet, dass** die Bewegungsvorrichtung (9) einen am Arm (5) angebrachten Aktuator (13) aufweist der einen Führungsstab (17) steuert, der gleitend an einer Schiene (10) des Schwenkarms (5) angebracht ist, um eine im Wesentlichen parallel zum Arm verlaufende Translation auf kontinuierlich variable Weise zu ermöglichen, um die relative Bewegung des Scheibenwischblatts in Bezug auf den Arm unabhängig davon auszuführen, welche Winkelposition der Arm (5) in Bezug auf die zu wischende Glasfläche (2) einnimmt, um eine vergrößerte Wischfläche zu erzielen.

2. Wischsystem (4) nach Anspruch 1, **dadurch gekennzeichnet, dass** das Bewegungssystem (9) eine Schneckenwellenanordnung zwischen dem Aktuator (13) und dem Führungsstab (17) aufweist.

3. Wischsystem (4) nach Anspruch 2, **dadurch gekennzeichnet, dass** die Schneckenwellenanordnung eine fest mit dem Führungsstab (17) verbundene Mutter (15) aufweist, die ein Gewinde (16) aufweist, das dazu dient, dem Gewindegang eines Stifts (14) zu folgen, der vom Aktuator (13) gesteuert ist.

4. Wischsystem (4) nach Anspruch 1, **dadurch gekennzeichnet, dass** das Bewegungssystem (9) einen Aktuator (13) vom Typ doppelt wirkender Zylinder aufweist, um die direkte Steuerung in Translation des Führungsstabs (17) zu ermöglichen.

5. Wischsystem (4) nach Anspruch 4, **dadurch gekennzeichnet, dass** der Zylinder einen Drehkolben aufweist, um die Steuerung des Einfallswinkels des Scheibenwischblatts (7) zu ermöglichen.

6. Wischsystem (4) nach einem der Ansprüche 1 bis 5, **dadurch gekennzeichnet, dass** das Scheibenwischblatt (7) am Führungsstab (17) angebracht ist.

7. Kraftfahrzeug, **dadurch gekennzeichnet, dass** es mindestens ein Wischsystem (4) gemäß einem der vorangegangenen Ansprüche aufweist.

8. Verfahren für den Betrieb eines Wischsystems (4) gemäß einem der Ansprüche 1 bis 7, **dadurch gekennzeichnet, dass** es einen Schritt aufweist, der darin besteht, dass das Steuersignal des Aktuators (13) in Abhängigkeit von der Stellung des Arms (5) gehandhabt wird.

9. Verfahren nach Anspruch 8, **dadurch gekennzeichnet, dass** es einen Schritt aufweist, der darin besteht, dass das Steuersignal des Aktuators (13) in Abhängigkeit der Bewegungsgeschwindigkeit des Arms (5) im Zuge seiner Schwenkbewegungen gehandhabt wird.

10. Verfahren nach Anspruch 8 oder 9, **dadurch gekennzeichnet, dass** es einen Schritt aufweist, der darin besteht, dass das Steuersignal des Aktuators (13) in Abhängigkeit der Frequenz der Schwenkbewegungen des Arms (5) gehandhabt wird.

11. Verfahren nach einem der Ansprüche 9 bis 10, **dadurch gekennzeichnet, dass** es einen Schritt aufweist, der darin besteht, dass das Steuersignal des Aktuators (13) in Abhängigkeit der Geschwindigkeit des Kraftfahrzeugs gehandhabt wird.
